**Europäisches Patentamt**

(19) **European Patent Office**

**Office européen des brevets**

(11) Veröffentlichungsnummer: **0 139 828**
**B1**

(12) # EUROPÄISCHE PATENTSCHRIFT

(45) Veröffentlichungstag der Patentschrift:
**28.10.87**

(51) Int. Cl.⁴: **A 61 C 7/00**

(21) Anmeldenummer: **84106370.4**

(22) Anmeldetag: **04.06.84**

(54) Satz vorgefertigter Feinregulierungsgeräte zur Endbehandlung bei der orthodontischen und kieferorthopädischen Zahnregulierung.

(30) Priorität: **24.08.83 DE 3330531**

(43) Veröffentlichungstag der Anmeldung:
**08.05.85 Patentblatt 85/19**

(45) Bekanntmachung des Hinweises auf die Patenterteilung:
**28.10.87 Patentblatt 87/44**

(84) Benannte Vertragsstaaten:
**AT BE CH FR GB IT LI LU NL SE**

(56) Entgegenhaltungen:
**DE - A - 2 608 797**
**DE - B - 1 616 125**
**US - A - 4 371 336**

**FORTSCHRITTE DER KIEFERORTHOPÄDIE, Band 37, 1976 G. SCHREMS-ADAM et al. "Der Positioner - ein Ersatz für das Einschleifen ?", Seiten 473-478**

(73) Patentinhaber: **Schrems, Hans Th., Dr. Dr., Dechbettener Strasse 1, D-8400 Regensburg 1 (DE)**
Patentinhaber: **Schrems-Adam, Gabriele, Dr., Dechbettener Strasse 1, D-8400 Regensburg 1 (DE)**

(72) Erfinder: **Schrems, Hans Th., Dr. Dr., Dechbettener Strasse 1, D-8400 Regensburg 1 (DE)**
Erfinder: **Schrems-Adam, Gabriele, Dr., Dechbettener Strasse 1, D-8400 Regensburg 1 (DE)**

(74) Vertreter: **Haft, Berngruber, Czybulka, Postfach 14 02 46, D-8000 München 5 (DE)**

## Beschreibung

Die Erfindung bezieht sich auf einen Satz vorgefertigter Feinregulierungsgeräte zur Endbehandlung bei der orthodontischen/kieferorthopädischen Zahnregulierung nach dem Oberbegriff des Anspruchs 1.

Bei der orthodontischen/kieferorthopädischen Behandlung werden Bänder, Spangen und funktionskieferorthopädische Geräte etc. dazu benutzt, die Zähne auszurichten oder wenigstens angenähert in eine vorbestimmbare Zahnstellung zu bringen. Um das z.B. durch Bänder erzielte Behandlungsergebnis zu sichern, oder, da nach der Entbänderung besonders labile dentale Verhältnisse bei gleichzeitig optimaler Reaktionsfähigkeit der Parodontien vorliegen, um kleine Stellungskorrekturen der Zähne vorzunehmen, die mit den vorher eingeliederten Apparaturen nicht oder nur schwer durchführbar sind, werden nach der Entbänderung Feinregulierungsgeräte eingesetzt, die im allgemeinen als «Positioner» bezeichnet werden.

Die Positioner werden dabei entweder mit Hilfe eines sogenannten Sägemodells individuell gefertigt (vgl. G. Schrems-Adam, H.Th. Schrems in «Fortschritte der Kieferorthopädie» 37, (1976), Seiten 473 bis 478) oder es wird ein Satz aus wenigen Positionern unterschiedlicher Grösse vorgefertigt, die nach leicht feststellbaren Parametern bemessen sind, und zwar entweder nach dem Gesamtabstand zwischen zwei bestimmten symmetrisch zur Kiefermitte gelegenen Zähnen des Kieferbogens (DE-B-16 16 125) oder zur Berücksichtigung der individuellen Unterkieferkinematik nach der Summe der mesio-distalen Durchmesser der Zähne sowie nach der Zahnbogenform (DE-C-32 32 550; nachveröffentlicht).

Die Zahnaufnahmemulden der genannten vorgefertigten Positioner sind dabei so ausgebildet, dass sie der äusseren Kontur der Zähne sehr genau angepasst sind, so dass der Positioner die Zähne in der der Set-up-Idealposition entsprechenden Situation eng anliegend umschliesst.

Die Zahnaufnahmemulden der individuell gefertigten Positioner sind so ausgebildet, dass sie der äusseren Kontur der Zähne sehr genau angepasst sind, so dass der Positioner die Zähne nach Beseitigung der Zahnfehlstellungen schliesslich enganliegend umschliesst. Die Zahnaufnahmemulden der genannten vorgefertigten Positioner sind so ausgebildet, dass sie der äusseren Kontur derjenigen Zähne sehr genau angepasst sind, die dem Urmodell bei der Herstellung der Idealokklusion (Set-up) zugrundegelegen haben.

Die äussere Gesamtkontur der Zähne ist jedoch selbst bei gleicher Summe der mesio-distalen Durchmesser der Zähne sowie gleicher Zahnbogenform von Patient zu Patient unterschiedlich.

In der Praxis tritt daher bei Verwendung der genannten vorgefertigten Positioner das Problem auf, dass, wenn die Zahnaufnahmemulden mit der Aussenkontur der Zähne des betreffenden Patienten nicht übereinstimmen, eine unbeabsichtigte Stellungsänderung der Zähne gegenüber der angestrebten Idealokklusion bewirkt wird, die in ihrem Ausmass umso grösser ist, je fleissiger der Patient seinen Positioner trägt. Daraus resultiert aber eine hohe Rezidivgefahr, d.h. die Gefahr eines Rückfalls in eine ähnliche Situation wie sie vor Behandlungsbeginn bestanden hat.

Weist nämlich beispielsweise die Kaufläche eines Zahnes durch eine Füllung nicht mehr die natürliche Form auf, so übt der Positioner, dessen Aufnahmemulde für diesen Zahn ja der Form der natürlichen Gruben und Fissuren entspricht, auf die Kaufläche dieses mit der Füllung versehenen Zahnes einen besonders grossen Druck aus. Die Folge ist, dass dieser Zahn stärker als die anderen Zähne in den Kieferknochen gedrückt wird, wodurch eine unbeabsichtigte Stellungsänderung auftritt. Diese Stellungsänderung wirkt sich auf die benachbarten Zähne aus und kann nach Art einer Kettenreaktion zu Stellungsänderungen zahlreicher anderer Zähne führen und damit die angestrebte Zahn- und Kieferbogenform wieder zunichte machen.

Die gleichen Probleme treten bei dem Positioner nach der US-A-371 336 auf, bei dem das den Kauflächen benachbarte Drittel der bukkalen und lingualen Flächen der Zähne präzise erfasst wird, während die restlichen zwei Drittel der bukkalen und lingualen Flächen bis zum Zahnfleisch freiliegen. Dieser Positioner weist zusätzlich den Nachteil auf, dass die Weichteile, wie Lippen, die Wange oder die Zunge z.B. beim Kauen, Sprechen und Schlucken an den freiliegenden bukkalen und lingualen Flächen der Zähne angreifen können, wodurch die Zähne in dem labilen Zustand nach dem Entbändern unerwünschten Kräften ausgesetzt werden.

Das Konstruktions- und Wirkungsprinzip der bekannten individuell gefertigten wie vorgefertigten Positioner geht also davon aus, dass die gewünschte Stellungsänderung der noch fehlerhaft stehenden Zähne über das wegen seiner Elastizität infolge des Kaudruckes sich eng an die gesamte Aussenfläche der Zähne anliegende Positionermaterial bewirkt wird. Diese Phase kann als aktive Positionerphase bezeichnet werden, weil hier noch ständig Zahnbewegungen durch den Positioner durchgeführt werden.

Wenn im Laufe von Wochen oder Monaten durch korrektes Positionertragen die Zähne in ihre Idealposition (Set-up-Position) gedrückt worden sind, soll der Positioner die erreichte Situation halten. Diese Phase kann passive Positionerphase genannt werden, weil eben keine Zahnbewegungen durch das Tragen des Positioners mehr bewirkt werden.

Die Erfahrung zeigt aber, dass vor allem dann, wenn die Unterkieferkinematik bei der Set-up-Anfertigung nicht berücksichtigt wurde, was überwiegend wegen des hohen zeitlichen und technischen Aufwandes der Fall ist, die im Positioner gehaltene passive Position der Ober- und Unterkieferzähne nicht funktionsgerecht ist.

Entfernt nämlich der Patient den Positioner aus dem Munde, treffen z.B. wegen der Nichtberücksichtigung der Unterkieferkinematik Oberkiefer-und Unterkieferzähne anders zusammen, als sie dies im Positioner tun. Wegen der komplexen Reliefstruktur der okklusalen Flächen kommt es deshalb punktuell an einem einzelnen Zahnpaar oder an mehreren Zahnpaaren bereits bei der ersten Zahnberührung in der gelenkkorrekten Schlussbissphase zu Frühkontakten und damit zu Überbelastungen einzelner Zähne und somit zu funktionsinduzierten unkontrollierten und unkontrollierbaren Auslenkungen der Zähne, die schliesslich zu einer Kettenreaktion in den einzelnen Zahnbögen und in den Zahnbögen zueinander führen.

Diese Zahnstellungsänderungen finden solange statt, bis sich innerhalb der Zahnbögen bei den verschiedenen funktionellen und parafunktionellen Belastungen ein Belastungsgleichgewicht eingestellt hat. In sehr vielen Fällen wird dieses Belastungsgleichgewicht nicht nur durch von der idealen Behandlungsendsituation (Set-up-Situation) abweichenden Zahnstellungsänderungen erreicht, sondern vor allem durch eine kompensatorische Verlagerung des Unterkiefers gegenüber dem Oberkiefer. Man kann also einen durch Funktion bedingten alveolären Kompensationsmechanismus von einem ebenfalls funktionsbedingten mandibulären (skelettalen) Kompensationsmechanismus unterscheiden.

Weiterhin zeigt die Erfahrung, dass es selbst bei höchstem Aufwand und bei Berücksichtigung der individuellen Unterkieferkinematik nur in Ausnahmefällen möglich ist, die theoretisch idealen Set-up-Verhältnisse beim Patienten zu erreichen. Neben fertigungstechnisch bedingten und materialtechnisch bedingten Fehlern ist vor allem die Unmöglichkeit, Gewebeverhalten und Gewebereaktionen ausreichend berücksichtigen zu können, dafür verantwortlich zu machen.

Man kann deshalb mit Hilfe einer präzisen orthodontischen/kieferorthopädischen Therapie unter Einsatz höchster Behandlungspräzision höchstens einen Zustand erreichen, der dem geplanten Idealzustand nahe kommt. Die letzten kleinen Stellungskorrekturen der Zähne, die erforderlich sind, um eine optimale Funktion und Belastung aller Komponenten bei Stabilität zu gewährleisten, werden durch natürliche Kompensationsmechanismen, z.B. die Form von kleinen Zahnstellungsänderungen oder Attritionen durch den Organismus selbst vorgenommen. Dieser individuelle Adaptionsvorgang lässt sich als individuelles Settling-in bezeichnen.

Zu unrecht wird aber häufig diese unerwünschte Stellungsveränderung der Zähne vom Behandler dem Patienten mit dem Vorwand angelastet, dass er sein Behandlungsgerät nicht mehr mit der geforderten Konsequenz trage. Es wurde deshalb bereits ein Verfahren angegeben, das eine bessere Retention sicherstellen soll. Aus der DE-OS 26 08 797 ist es bekannt, auf den Positioner ein weiches verformbares Material aufzutragen und dann den Positioner in den Mund des Patienten einzusetzen, worauf der Patient die Zähne für ein paar Minuten zu schliessen hat, bis das aufgetragene Material hart geworden ist und sich mit dem Grundmaterial des Positioners verbunden hat.

Wie oben ausgeführt, ist aber durch derartige Massnahmen eine Verhinderung unbeabsichtigter Stellungsänderungen der Zähne nur so lange möglich, wie das Gerät konsequent getragen wird. Wie bei den übrigen bekannten Positionern tritt jedoch, sobald das nach der DE-OS 26 08 797 zum Retentionsgerät umfunktionierte Gerät abgesetzt wird und die Zähne entsprechend den funktionellen Gegebenheiten aufeinander «losgelassen» werden, wieder die bekannte Folge unerwünschter Zahnstellungsänderungen (Rezidiv) auf, so dass damit nur ein erhöhter Arbeitsaufwand und ein Konservierungseffekt, nicht aber ein therapeutischer Langzeiteffekt verbunden ist.

Es ist also auch mit dem Positioner nach der DE-OS 26 08 797 nicht möglich, bestehende Zahnformdiskrepanzen zwischen den Patientenzähnen und einem vorgefertigten Positioner auszugleichen, um einen besseren Behandlungseffekt des vorgefertigten Positioners zu erreichen. Auch hier wird vielmehr nur ein Konservierungseffekt der gerade vorliegenden Okklusion bewerkstelligt.

Vor allem aber werden bei dem bekannten Positioner keinerlei Massnahmen getroffen, die auf die jeweilige terminale Scharnierachsenposition, geschweige denn auf die ideale Schlussbissstellung abstellen, bei der eine maximale Interkuspidation bei terminaler Scharnierachsenposition vorliegt. Dies hat zur Folge, dass beim Einbeissen in den bekannten Positioner die Kiefergelenkköpfe zum Teil stark aus ihren Gelenkpfannen bewegt werden. Nach dem Absetzen des bekannten Positioners tritt daher bei Interkuspidation fast immer eine starke Auslenkung der Kiefergelenkköpfe aus den Gelenkpfannen auf. Dadurch kommt es zu einer starken mechanischen Beeinflussung der Gelenke und des neuromuskolären Systems mit meist irreparablen Schädigungen bzw. Folgeschäden.

Mit anderen Worten, bei Verwendung der bekannten individuell gefertigten oder vorgefertigten Positionern, deren Zahnaufnahmemulden in der Form von den Patientenzahnformen abweichen und/oder kein funktionskoordiniertes Set-up aufweisen, kommt es also immer, spätestens nach Absetzen des Positioners, zu nachfolgenden Fehlstellungen der Zähne.

Aufgabe der Erfindung ist es, einen Satz vorgefertigter Positioner zu schaffen, der das durch die orthodontisch/kieferorthopädische Behandlung erreichte Ergebnis zuverlässig sichert, ohne dass zusätzliche Arbeiten an dem vorgefertigten Positioner durchgeführt werden müssen.

Dies wird erfindungsgemäss durch einen Satz vorgefertigter Feinregulierungsgeräte zur Endbehandlung bei der orthodontischen/kieferorthopädischen Zahnregulierung (Positioner) nach dem Anspruch 1 erreicht.

Die Grundlage der Erfindung bildet dabei die Feststellung, dass bei einer bestimmten Zahnbogenlänge und einer bestimmten Zahnbogenform die Lage der Höckerspitzen und Schneidekanten der Zähne, also der positiven okkludierenden Zahnteile, bei jedem Patienten praktisch identisch ist, d.h. allein durch die Zahnbogenlänge und die Zahnbogenform lässt sich die Lage dieser okkludierenden Zahnteile genau definieren. Variationen der Zähne bestehen jedoch in anderer anatomischer Hinsicht sowie durch bestimmte erfolgte Zahnbehandlungen.

In anatomischer Hinsicht sind beispielsweise die äussere Kontur der Zähne bei Betrachtung in gingivaler Richtung, die Steilheit der Seitenflächen der Höcker und der Seitenkanten sowie der Tiefe der Zahngruben und Fissuren unterschiedlich. Bei den Zahnbehandlungen sind beispielsweise die Füllungen zu nennen.

Ausser der Feststellung, dass bei einer bestimmten Zahnbogenlänge und Zahnbogenform die Lage der okkludierenden Teile der Zähne genau definiert wird, spielt bei der Erfindung weiterhin die Erkenntnis eine wesentliche Rolle, dass es zum Halten der Zähne sowie für kleine Stellungskorrekturen ausschliesslich darauf ankommt, dass auf die okkludierenden Teile der Zähne eine Kraft ausgeübt wird. Im Gegensatz zu den bekannten Positionern, insbesondere nach der DE-A-16 16 125 sowie der DE-A-26 08 797 ist es also nicht erforderlich, dass der Positioner mit seinen Zahnaufnahmemulden allseitig fest an den Zähnen anliegt, um die Zähne sicher zu halten.

D.h., die nicht okkludierenden Teile der Zähne, die, wie erwähnt, in anatomischer Hinsicht und durch bestimmte Zahnbehandlungen unterschiedliche Formen (bei gleicher Zahnbogenlänge und gleicher Zahnbogenform) besitzen können, brauchen gar keiner Belastung ausgesetzt zu werden, so dass die Zahnaufnahmemulden in dem Bereich, der zur Aufnahme der nicht okkludierenden Zahnteile vorgesehen ist, ausgespart oder sehr nachgiebig ausgebildet sein können.

Durch die Aussparungen der Aufnahmemulden des Positioners im Bereich der Gruben und Fissuren der Zähne, wird also beispielsweise die vorstehend geschilderte Stellungsänderung verhindert, die durch einen mit einer Füllung versehenen Zahn bei dem bekannten Positioner auftritt. Gleiches gilt für die Aussparungen der Aufnahmemulden, um eine grössere Kontur der Zähne, insbesondere in labialer und lingualer Richtung zu berücksichtigen.

Anders ausgedrückt, bei der Erfindung wird aus der Erkenntnis Nutzen gezogen, dass bei einem Positioner durch das Einbauen gewisser Toleranzen an Stellen, die für die gegenseitige Stabilisierung der Zahnbögen in sich und untereinander von untergeordneter Bedeutung oder gar unwichtig sind, keine negativen Effekte für das therapeutische Ergebnis zu erwarten sind.

Die Stabilisierung der Zahnbögen gegeneinander wird durch die okkludierenden Teile, nämlich die Höcker und Fissuren bzw. Schmelzwülste und Schmelzleisten gewährleistet. Die okkludierenden Teile und hier insbesondere die tragenden Höcker – das sind im Oberkiefer die palatinalen und im Unterkiefer die bukkalen Höcker – sind bei vorgegebener Zahnbogen- und Kieferbogenlänge in ihrer räumlichen Lage zueinander nahezu konstant, unabhängig von morphologischen Varianten der Einzelzähne. Sie haben weiterhin den Vorteil, dass zahnärztliche Massnahmen an ihnen, zumal im Kindesalter, noch nicht durchgeführt worden sind. Sie stellen damit den bestmöglichen Angriffspunkt für einen vorgefertigten Positioner dar. Ebenfalls als Angriffspunkt geeignet sind alle die Okklusion mittragenden Teile, nämlich die Schneidekanten der Eckzähne und Frontzähne. Sie haben jedoch den Nachteil einer hohen morphologischen Varianz und weisen bereits im Kindesalter Oberflächenveränderungen (Abrasionen) auf, die durch funktionelle oder parafunktionelle und anomaliebedingte Überbelastungen hervorgerufen sind. Sie müssen dann durch Einschleifmassnahmen rechtzeitig kompensiert werden.

Bei Vorliegen von Zahn- und Kieferfehlstellungen hat die Annäherung an den planbaren Idealzustand also mit Hilfe der bekannten orthodontischen kieferorthopädischen Behandlungsmittel zu erfolgen.

Wesentlich ist nun, dass für die letzten Feinkorrekturen, die aber für ein funktionsstabiles Behandlungsresultat von grösster Wichtigkeit sind, unter Berücksichtigung der individuellen Unterkieferkinematik bisher eigentlich nur mit den bekannten individuell gefertigten Positionern zufriedenstellende Ergebnisse erreicht wurden. Da die Herstellung eines derartigen Positioners jedoch mit einem fast nicht vertretbaren Aufwand verbunden ist und auch mit einem derartigen Gerät nur eine bestmögliche Annäherung an die gewünschte ideale Situation erreicht werden kann, die letztlich definitive Einstellung aber der Organismus selbst zu tätigen hat, wird erfindungsgemäss ein vorgefertigter Positioner angegeben, dessen Wirkungsweise die Höckerspitzen mit Bevorzugung der tragenden Höckerspitzen und die Schneidekanten der Zähne als die am wenigsten veränderlichen Bezugspunkte des Gebisses zugrundeliegen.

Damit ist es möglich, eine optimale Annäherung an die Idealokklusion bei unterschiedlichen morphologischen Gegebenheiten zu erreichen. Der Annäherungseffekt mit dem erfindungsgemässen Positioner ist nach den bisher gewonnenen Erfahrungen mindestens ebenso gross und häufig sogar besser als mit einem individuell hergestellten Positioner. Das individuelle Adaptationsvermögen wird durch den Einsatz des Gerätes nur minimal gefordert und keinesfalls überfordert. Unbeabsichtigte Stellungsveränderungen der Zähne, die fast immer bei der Verwendung vorkonfektionierter Positioner wegen der morphologischen Varianz vorkommen, werden weitestgehend und zuverlässig verhindert.

Ein weiterer Vorteil besteht darin, dass der erfindungsgemässe Positioner in der Lage ist, die Ursachen (z.B. fehlerhafte Kauflächengestaltung durch Füllungen) für das Entstehen von Rezidiven rechtzeitig sichtbar zu machen, vorausgesetzt, es wurde der richtige Positioner aus dem Satz an Hand der bekannten Auswahlkriterien (Summe der mesio-distalen Durchmesser der Zähne und Zahnbogenform des Patienten) ausgewählt.

Nachstehend ist eine Ausführungsform des erfindungsgemässen Positioners anhand der Zeichnung näher erläutert. Darin zeigen:

Figur 1 einen Positioner in perspektivischer Wiedergabe; und

Figuren 2 und 3 einen Schnitt durch den Positioner nach Figur 1 entlang der Linie II–II bzw. III–III.

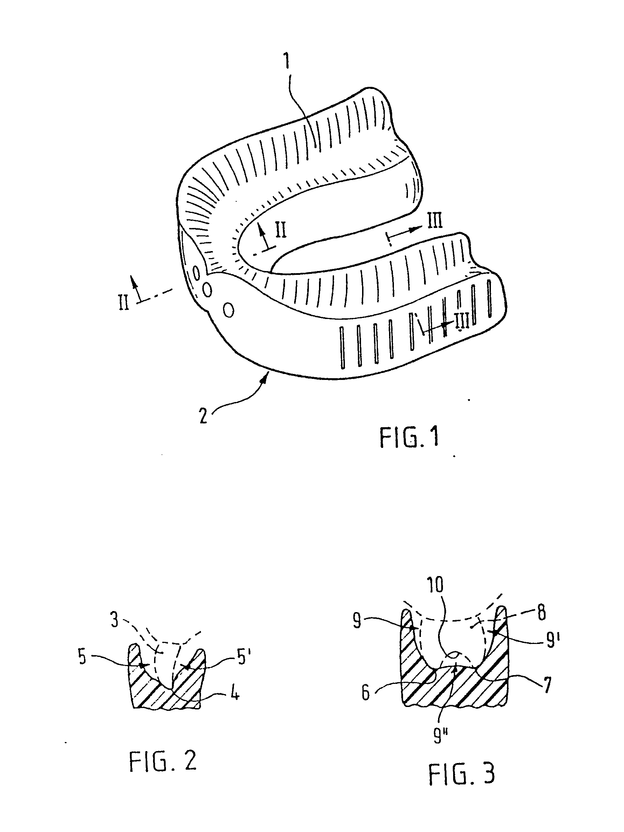

Der Positioner weist gemäss Figur 1 eine rillenförmige Aufnahmemulde 1 für die Oberkieferzähne und eine in Figur 1 nicht sichtbare rillenförmige Aufnahmemulde 2 für die Unterkieferzähne auf.

Die Länge der Aufnahmemulden 1 und 2 des betreffenden Positioner entspricht dabei einer bestimmten Summe der mesio-distalen Durchmesser aller Zähne des Ober- bzw. Unterkiefers. Auch weist der Positioner eine bestimmte Zahnbogenform auf, die einer der drei hauptsächlichen Zahnbogenformen entspricht (vgl. Ricketts «Design of Arch Form and Details for Bracket Placement» 1979, herausgegeben von Rocky Mountains/Orthodontics).

Wie aus Figur 2 ersichtlich, ist die Zahnaufnahmemulde 1 im Bereich des Schneidezahns 3 so ausgebildet, dass sie im Bereich der Schneidkante 4 des Schneidezahns 3 eng anliegt, jedoch in den übrigen Bereichen 5, 5', also im Bereich der Zahnflanken des Schneidezahns 3 ausgespart ist.

Durch diese Massnahme wird der Einsatz des vorgefertigten Positioners bei unterschiedlichem morphologischen Aufbau der Frontzähne vor allem in bukko-palatinaler Richtung möglich.

Gemäss Figur 3 liegt die Zahnaufnahmemulde 1 im Bereich der Höckerspitzen 6 und 7 eng an dem Molaren 8 an, ist jedoch in den übrigen Bereichen 9, 9', 9'' derart ausgespart, dass ein Kontakt auch bei erheblicher Variation des Molaren 8 biespielsweise in lingualer oder labialer Richtung nicht zustande kommt. Auch im Bereich 9'' ist ein Kontakt mit dem Molaren 8 selbst dann ausgeschlossen, wenn die Grube 10 mit einer zu hohen und damit fehlerhaften, weil okklusionsverändernden Füllung versehen ist.

Bei dieser Ausführungsform des Positioners wird also durch die Aufnahmemulden 1 und 2 nur auf die okkludierenden Teile der Zähne, d.h. die Schneidekanten der Front- und Eckzähne und die Höckerspitzen der Seitenzähne Druck ausgeübt, während die Zahnaufnahmemulden 1, 2 ausserhalb des Bereiches zur Aufnahme der okkludierenden Teile, also in den Bereichen 5, 5' sowie 9, 9', 9'' ausgespart sind.

Entscheidend für eine bestmögliche Positionerfunktion ist vor allem, dass mit Hilfe der Aufnahmemulden die zahnbogenlängenspezifische und kieferbogen-längenspezifische Bogencharakteristik erfasst wird unter Berücksichtigung der Unterkieferkinematik.

Statt der Aussparungen kann der erfindungsgemässe Positioner auch Zahnaufnahmemulden aufweisen, die im Bereich zur Aufnahme der okkludierenden Teile der Zähne aus einem Material mit einem höheren Elastizitätsmodul bestehen als im Bereich der nicht okkludierenden Teile der Zähne. Der Elastizitätsmodul des Materials kann dabei vom Bereich zur Aufnahme der okkludierenden Teile der Zähne gingival progressiv abnehmen.

Zusätzlich können die Zahnaufnahmemulden auch so ausgebildet sein, dass sie ausserhalb des Bereichs zur Aufnahme der okkludierenden Teile der Zähne aus einem plastisch verformbaren Material bestehen.

Wesentlich ist lediglich, dass die okkludierenden Teile der Zähne, also die Schneidekanten der Front- und Eckzähne und die Höckerspitzen der Seitenzähne stets optimal fixiert sind, d.h. die zahnbogen-längenspezifische und kieferbogen-längenspezifische Bogencharakteristik durch geeignete Überfangung der Zahne ausreichend fixiert wird.

Der erfindungsgemässe Positioner kann beispielsweise folgendermassen hergestellt werden.

Es wird ein Modell mit Idealbezahnung und mit idealen Gelenkverhältnissen hergestellt. Das Modell wird im Bereich der Gruben und Fissuren ausgewachst und durch Auftragen von Wachs werden die einzelnen Zahntypen jeweils der grössten nach der statistischen Verteilung vorkommenden Zahnform angenähert oder durch Zahnauswahl gefunden. Das Modell wird mit einem Artikulator auf nachteilige Auswirkungen durch das Auftragen des Wachses in bezug auf die Okklusion und die Gelenkverhältnisse überprüft. Alsdann wird es mit einer Tiefziehfolie überzogen, um eine gleichmässige und glatte Oberfläche zu erhalten. Von dem tiefgezogenen Modell wird dann ein Abdruck genommen und aus dem Abdruck ein Spezialmodell zur Herstellung des vorgefertigten Positioners hergestellt.

Für den erfolgreichen Einsatz des erfindungsgemässen Positioners ist selbstverständlich eine Überprüfung aller okkludierender Flächen einschliesslich der häufig durch zahnärztliche Massnahmen veränderten negativen tragenden Okklusionsflächen (Gruben etc.) erforderlich. Gegebenenfalls muss eine Revision der durch zahnärztliche Massnahmen veränderten Kauflächen erfolgen durch Wegschleifen von zuviel aufgebrachtem und nicht mehr der ursprünglichen Zahnoberfläche entsprechendem Füllungsmaterial. Selbstverständlich ist auch eine Überprüfung eventuell durch Füllungen bedingter mesio-distaler Längenveränderungen erforderlich. Diese zuletzt angegebenen Überprüfungen sind aber für den erfolgreichen Einsatz jeglicher orthodontischen/kieferorthopädischen Behandlungsmittels grundsätzlich erforderlich.

**Patentansprüche**

1. Satz vorgefertigter Feinregulierungsgeräte zur Endbehandlung bei der orthodontischen/kieferorthopädischen Zahnregulierung, wobei die zahnbogenförmigen Zahnregulierungsgeräte aus elastischem Material bestehen und Zahnaufnahmemulden aufweisen, deren Länge entsprechend der statistischen Verteilung mesio-distaler Zahndurchmesser der Patienten bemessen ist, wobei die Feinregulierungsgeräte des Satzes im wesentlichen den gesamten bei Patienten vorkommenden Kiefer- und Zahngrössenbereich überdecken, dadurch gekennzeichnet, dass die Zahnaufnahmemulden (1, 2) ausserhalb des Bereiches zur Aufnahme der okkludierenden Teile der Zähne ausgespart sind oder im Bereich zur Aufnahme der okkludierenden Teile der Zähne aus einem elastischen Material mit einem höheren Elastizitätsmodul als ausserhalb dieses Bereichs bestehen, so dass bei eingesetztem Feinregulierungsgerät der auf die Zähne (3, 8) ausgeübte Druck im Bereich der okkludierenden Teile der Zähne (3, 8) am grössten ist.

2. Feinregulierungsgerätesatz nach Anspruch 1, dadurch gekennzeichnet, dass die okkludierenden Teile durch die Höckerspitzen (6, 7) der Seitenzähne (8) gebildet werden.

3. Feinregulierungsgerätesatz nach Anspruch 1 oder 2, dadurch gekennzeichnet, dass die okkludierenden Teile durch die Schneidekanten (4) der Front- und Eckzähne (3) gebildet werden.

4. Feinregulierungsgerätesatz nach Anspruch 1, 2 oder 3, dadurch gekennzeichnet, dass die Zahnaufnahmemulden (1, 2) den grössten nach der statistischen Verteilung vorkommenden Abmessungen der betreffenden, einen bestimmten mesiodistalen Durchmesser aufweisenden Zähne (3, 8) entsprechen.

5. Feinregulierungsgerätesatz nach einem der vorstehenden Anspruche, dadurch gekennzeichnet, dass der Elastizitätsmodul des Materials vom Bereich zur Aufnahme der okkludierenden Teile der Zähne bzw. der Schneidekanten (4) der Front- und Eckzähne (3) bzw. der Höckerspitzen (6, 7) der Seitenzähne (8) gingival allmählich abnimmt.

6. Feinregulierungsgerätesatz nach einem der vorstehenden Ansprüche, dadurch gekennzeichnet, dass die Zahnaufnahmemulden (1, 2) ausserhalb des Bereiches zur Aufnahme der okkludierenden Teile der Zähne bzw. der Schneidekanten (4) der Front- und Eckzähne (3) bzw. der Höckerspitzen (6, 7) der Seitenzähne (8) aus einem plastisch verformbaren Material bestehen.

7. Feinregulierungsgerätesatz nach einem der vorstehenden Ansprüche, dadurch gekennzeichnet, dass die Ausführung der Zahnaufnahmemulden in Abhängigkeit von den verschiedenen Angle-Klassen (I, II, III) modifiziert ist.

## Revendications

1. Jeu d'appareils préfabriqués de réglage fin pour le traitement final lors du réglage de dents à des fins d'orthodontie et d'orthopédie de la mâchoire, les appareils de réglage de dents en forme d'arc de dentition étant réalisés en un matériau élastique et présentant des cavités réceptrices de dents dont la longueur est dimensionnée conformément à la distribution statistique des diamètres mésio-distaux des dents des patients, et les appareils de réglage fin du jeu recouvrant sensiblement la totalité de la plage de tailles de dents et de mâchoires rencontrées sur les patients, caractérisé en ce que les cavités réceptrices de dents (1, 2) sont évidées en dehors de la région destinée à recevoir les parties occlusives des dents, ou sont réalisées dans la région destinée à recevoir les parties occlusives des dents en un matériau élastique présentant un module d'élasticité plus élevé qu'en dehors de cette région, de sorte que lorsque l'appareil de réglage fin est mis en place, la pression exercée sur les dents (3, 8) soit maximale dans la région des parties occlusives des dents (3, 8).

2. Jeu d'appareils de réglage fin selon la revendication 1, caractérisé en ce que les parties occlusives sont constituées par les sommets (6, 7) des bosses des molaires et des prémolaires (8).

3. Jeu d'appareils de réglage fin selon la revendication 1 ou 2, caractérisé en ce que les parties occlusives sont constituées par les bords de coupe (4) des incisives et des canines (3).

4. Jeu d'appareils de réglage fin selon la revendication 1, 2 ou 3, caractérisé en ce que les cavités réceptrices de dents (1, 2) correspondent aux dimensions maximales, rencontrées dans la distribution statistique, des dents concernées (3, 8) présentant un diamètre mésiodistal donné.

5. Jeu d'appareils de réglage fin selon une des revendications précédentes, caractérisé en ce que le module d'élasticité du matériau diminue progressivement de manière gingivale depuis la région destinée à recevoir les parties occlusives des dents ou encore les bords de coupe (4) des incisives et des canines (3) ou selon le cas les sommets (6, 7) des molaires et des prémolaires (8).

6. Jeu d'appareils de réglage fin selon une des revendications précédentes, caractérisé en ce que les cavités réceptrices de dents (1, 2) sont réalisées en un matériau plastiquement déformable en dehors de la région destinée à recevoir les parties occlusives des dents ou encore les bords de coupe (4) des incisives et des canines (3) ou selon le cas le sommets (6, 7) des molaires et des prémolaires (8).

7. Jeu d'appareils de réglage fin selon une des revendications précédentes, caractérisé en ce que l'exécution des cavités réceptrices de dents est modifiée en fonction des différentes catégories d'«Angle» (I, II, III).

## Claims

1. A set of prefabricated fine adjustment devices for end treatment in the orthodontic adjustment of teeth, the dental adjustment devices of dental arch shape being made of elastic material and having tooth receiving depressions whose length is dimensioned in accordance with the statistical distribution of the patient's mesio-distal tooth diameters, the fine adjustment devices of the set covering substantially the entire range of jaw and tooth sizes occurring in patients, characterized in that the tooth receiving depressions (1, 2) are formed outside the area for receiving the occludent parts of the teeth or are made in the area for receiving the occludent parts of the teeth of elastic material with a higher elastic modulus than outside this area so that when the fine adjustment device is in place the pressure exerted on the teeth (3, 8) is largest in the area of the occludent parts of the teeth (3, 8).

2. A set of fine adjustment devices according to claim 1, characterized in that the occludent parts are formed by the tips of the cusps (6, 7) of the side teeth (8).

3. A set of fine adjustment devices according to claim 1 or 2, characterized in that the occludent parts are formed by the cutting edges (4) of the front and canine teeth (3).

4. A set of fine adjustment devices according to claim 1, 2 or 3, characterized in that the tooth receiving depressions (1, 2) correspond to the largest dimensions occurring according to the statistical distribution of the teeth (3, 8) in question having a certain mesio-distal diameter.

5. A set of fine adjustment devices according to any of the above claims, characterized in that the elastic modulus of the material gradually decreases gingivally from the area for receiving the occludent parts of the teeth or the cutting edges (4) of the front and canine teeth (3) or the tips (6, 7) of the cusps of the side teeth (8).

6. A set of fine adjustment devices according to any of the above claims, characterized in that the tooth receiving depressions (1, 2) are made of a plastically deformable material outside the area for receiving the occludent parts of the teeth or the cutting edges (4) of the front and canine teeth (3) or the tips (6, 7) of the cusps of the side teeth (8).

7. A set of fine adjustment devices according to any of the above claims, characterized in that the design of the tooth receiving depressions is modified in accordance with the various angle classes (I, II, II).

1/7

FIG.1

FIG. 2

FIG. 3